# EUROPÄISCHE PATENTSCHRIFT

(11) **EP 0 444 719 B1**
(45) Veröffentlichungstag und Bekanntmachung des Hinweises auf die Patenterteilung: **29.06.1994**
(21) Anmeldenummer: 91200103.9
(22) Anmeldetag: 21.01.1991
(51) Int. Cl.: G01T 1/20

(54) **Verfahren zum Messen von Röntgen- oder Gammastrahlung und dafür geeignete Messeinrichtung**
Method of measurement of X- or gamma-rays and measuring apparatus suitable for that
Procédé de mesure des rayons X ou gamma et appareil conçu à cet effet

(30) Priorität: 27.01.1990 DE 4002432
(43) Veröffentlichungstag der Anmeldung: 04.09.1991
(73) Patentinhaber: Philips Patentverwaltung GmbH, 22335 Hamburg (DE); Philips Electronics N.V., 5621 BA Eindhoven (NL)
(72) Erfinder: Lumma, Waldemar, W-2000 Hamburg 67 (DE)
(74) Vertreter: Hartmann, Heinrich, Dipl.-Ing.

(56) Entgegenhaltungen:
- EP-A- 0 203 325
- DE-A- 2 401 836
- DE-A- 3 242 663
- PATENT ABSTRACTS OF JAPAN, Band 8, Nr. 79 (P-267)[1516], 11. April 1984 ; & JP-A-58 223 775 (NIPPON GENSHIRYOKU KENKYUSHO) 26-12-1983

## Beschreibung

Die Erfindung betrifft ein Verfahren zum Messen von Röntgen- oder Gammastrahlung mit einer Meßeinrichtung, die eine der Röntgen- oder Gammastrahlung ausgesetzte Leuchtstoffschicht umfaßt, deren Lumineszenzstrahlung durch einen photoelektrischen Wandler in ein elektrisches Signal umgesetzt wird sowie eine Meßeinrichtung zur Durchführung des Verfahrens.

Ein solches Verfahren und eine solche Meßeinrichtung sind aus der DE-OS 32 42 663 bekannt. Dabei besteht die Gefahr, daß sich die Empfindlichkeit, d.h. die Amplitude des vom Wandler gelieferten Signals, bezogen auf die Intensität der auf die Leuchtstoffschicht treffenden Strahlung, durch Alterung oder Umgebungseinflüsse ändert.

Es ist Aufgabe der vorliegenden Erfindung, ein Verfahren und eine Meßeinrichtung anzugeben, die es gestattet, solche Einflüsse zu kompensieren. Diese Aufgabe wird erfindungsgemäß dadurch gelöst, daß die Leuchtstoffschicht einen elektrolumineszenten Leuchtstoff enthält, daß die Leuchtstoffschicht wiederholt einem elektrischen Feld ausgesetzt und dabei die Empfindlichkeit der Leuchtstoffschicht und des Wandlers gemessen und gespeichert wird und daß der Übertragungsfaktor der Meßeinrichtung jeweils in Abhängigkeit von der gespeicherten Empfindlichkeit geändert wird.

Bei der Erfindung wird ein elektrolumineszenter Leuchtstoff verwendet, d.h. ein Leuchtstoff, der nicht nur durch Röntgen- bzw. Gammastrahlung zur Emission von Lumineszenzlicht angeregt wird, sondern auch durch ein elektrisches Feld, in der Regel ein Wechselfeld. Die Erfindung beruht auf der Erkenntnis, daß die gleichen Lumineszenzzentren in der Leuchtstoffschicht sowohl bei Anregung durch Röntgen- bzw. Gammastrahlung als auch bei Anregung durch ein elektrisches Feld das Lumineszenzlicht erzeugen. Daher ändert sich die Intensität der Röntgenstrahlung, die erforderlich ist, um eine definierte Lumineszenzintensität zu erzeugen, in gleicher Weise wie das für diese Lumineszenzintensität erforderliche elektrische Feld. Eine solche Änderung der Lumineszenzeigenschaften der Leuchtstoffschicht wirkt sich naturgemäß auch auf die Empfindlichkeit (Amplitude des Ausgangssignals des Wandlers, bezogen auf die Anregungsintensität der Leuchtstoffschicht) der aus Leuchtstoffschicht und Wandler bestehenden Kombination aus. Wenn die Empfindlichkeit (bei die Anregung durch ein elektrisches Feld) von Zeit zu Zeit gemessen und gespeichert wird, dann können bei der Erfassung einer Röntgen- oder Gammastrahlung Empfindlichkeitsänderungen durch Änderung des Übertragungsfaktors der Meßeinrichtung in Abhängigkeit von der gespeicherten Empfindlichkeit kompensiert werden.

Eine erste Anordnung zur Durchführung des erfindungsgemäßen Verfahrens ist dadurch gekennzeichnet, daß die Leuchtstoffschicht zwischen zwei Elektroden angeordnet ist, die an eine Spannngsquelle anschließbar sind, daß Mittel zum Ableiten eines Eichfaktors aus der Spannung an den Elektroden und dem Signal des Wandlers vorgesehen sind, und daß Mittel zum Modifizieren des bei Einwirkung der Röntgen- oder Gammastrahlung auf die Leuchtstoffschicht erzeugten Signals des Wandlers in Abhängigkeit von dem Eichfaktor vorgesehen sind. Hierbei wird der Meßwert der Strahlungsintensität aus dem Signal des Wandlers abgeleitet.

Eine andere Einrichtung zur Durchführung des erfindungsgemäßen Verfahrens ist demgegenüber dadurch gekennzeichnet, daß die Leuchtstoffschicht zwischen zwei an eine steuerbare Spannungsquelle anschließbaren Elektroden angeordnet ist, daß die Spannungsquelle Teil eines Regelkreises ist, in dem bei einer Messung der Röntgen- oder Gammastrahlung die Spannung an den Elektroden einen solchen Wert annimmt, daß das Signal des Wandlers einem Sollwert entspricht, und daß der Meßwert der Röntgenstrahlung aus der Spannung an den Elektroden abgeleitet wird. Hierbei wird das Ausgangssignal des Wandlers durch den Regelkreis praktisch konstant gehalten. Der Meßwert der Röntgenstrahlung wird aus der Amplitude der Spannung an den Elektroden abgeleitet; der Meßwert ist umso kleiner, je größer diese Amplitude ist.

Die Erfindung wird nachstehend anhand der Zeichnung näher erläutert. Es zeigen
- Fig. 1: das Blockschaltbild einer ersten Meßeinrichtung und
- Fig. 2: das Blockschaltbild einer zweiten Meßeinrichtung.

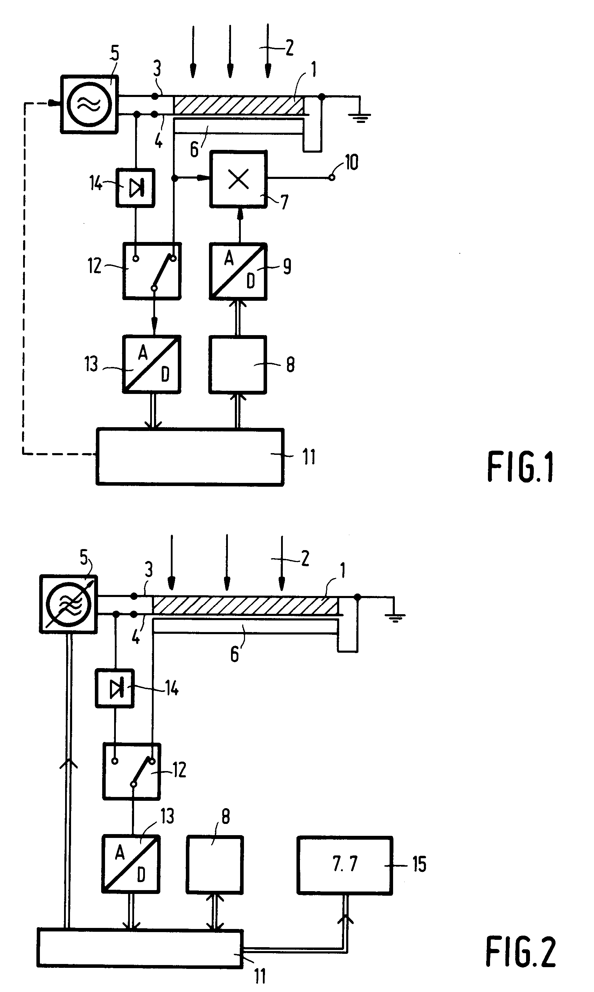

In Fig. 1 ist mit 1 eine Leuchtstoffschicht bezeichnet, die sowohl Radiolumineszenz- als auch Elektrolumineszenzeigenschaften aufweist. Die Leuchtstoffschicht, die beispielsweise aus aktiviertem Zinksulfid bestehen kann, kann also sowohl durch Röntgenstrahlung als auch durch ein elektrisches Wechselfeld zur Emission von Lumineszenzlicht angeregt werden. Die Leuchtstoffschicht, die eine ausreichende Dicke hat, um Röntgenquanten aus dem Röntgenstrahlenbündel 2 zu absorbieren, z.B. einige 100 »m, befindet sich zwischen zwei parallelen, zur Zeichenebene senkrechten, ebenen Elektroden 3 bzw. 4. Die dem Röntgenstrahlenbündel zugewandte Elektrode 3 ist so gestaltet, daß sie für die Röntgenstrahlung praktisch transparent, für die Lumineszenzstrahlung jedoch reflektierend ist. Die Elektrode 4 hingegen ist auch für das Lumineszenzlicht transparent.

Die beiden Elektroden 3 und 4 sind an einen Wechselspannungsgenerator 5 angeschlossen, der eine Wechselspannung mit einer Frequenz von einigen 100 Hz und einer Amplitude erzeugen kann, die ausreicht, um die Lumineszenz in der Leuchtstoffschicht anzuregen. Im Zusammenhang mit dem Wechselspannungsgenerator wirkt das aus den Elektroden 3, 4 und der dazwischen angeordneten Leuchtstoffschicht bestehende Gebilde wie eine Elektrolumineszenz-Leuchtfolie, wie sie bei Displays zur Hintergrundbeleuchtung benutzt werden bzw. wie ein Lumineszenzkondensator.

Das in der Leuchtstoffschicht beim Auftreffen einer Röntgenstrahlung erzeugte Lumineszenzlicht, das durch die Elektrode 4 hindurch austritt, wird von einem optisch damit gekoppelten Wandler 6 in ein elektrisches Signal umgesetzt und mittels eines nicht näher dargestellten Verstärkers auf einen geeigneten Pegel umgesetzt. Der Wandler 6 kann aus einer oder mehreren Photodioden bestehen, die die Licht emittierende Fläche ganz oder teilweise erfassen. Das Ausgangssignal des Wandlers 6 wird dem einen Eingang einer Multiplizierstufe 7 zugeführt. In der Multiplizierstufe 7 wird es mit einem Signal multipliziert, das als Digitalwert in einem Speicher 8 gespeichert wird und einem zweiten Eingang der Multiplizierschaltung über einen Digital-Analogwandler 9 zugeführt wird. Das Signal am Ausgang 10 der Multiplizierstufe ist ein Maß für die Intensität der Röntgenstrahlung in dem Strahlenbündel 2; es stellt somit den Meßwert der Röntgenstrahlung dar.

Wie bereits erwähnt, kann sich die Empfindlichkeit des Lumineszenzkondensators 1, 3, 4 und/oder des Wandlers 6 als Folge von Umgebungseinflüssen oder Alterungsprozessen ändern. Um zu verhindern, daß der Meßwert am Ausgang 10 sich in diesem Fall ebenfalls ändert, ist eine Rechen- und Steuereinheit 11 vorgesehen, die beispielsweise einen geeignet programmierten Mikroprozessor enthalten kann, die den im Speicher 8 enthaltenen Wert - im folgenden als Eichfaktor bezeichnet, den jeweiligen Empfindlichkeitsänderungen anpaßt.

Deshalb wird von Zeit zu Zeit, erforderlichenfalls aber auch bei jeder Messung, die Empfindlichkeit der Kombination aus Leuchtstoff 1 und Bildwandler 6 für elektrische Anregung (bei eingeschaltetem Wechselspannungserzeuger 5 und abgeschalteter Röntgen- bzw. Gammastrahlung) gemessen und daraus ein Eichfaktor bestimmt. Zu diesem Zweck wird der Rechen- und Steuereinheit 11 über einen Demultiplexer 12 und einem Analog-Digitalwandler 13 ein erstes Signal zugeführt, das dem (verstärkten) Ausgangssignal des Wandlers 6 entspricht und ein zweites Signal, das der Amplitude der Spannung zwischen den Elektroden 3,4 entspricht. Das zweite Signal wird von einer Gleichrichtereinheit 14 geliefert, die eine Gleichspannung erzeugt, die der Amplitude der Wechselspannung proportional ist, aber wesentlich kleiner ist als diese, so daß das erste und das zweite Signal von gleicher Größenordnung sind.

Die Rechen- und Steuereinheit 11 bildet den Quotienten aus dem zweiten und dem ersten Signal und speichert diesen bzw. einen davon abhängigen Wert als Eichfaktor in dem Speicher 8. Der Eichfaktor 8 ist umso größer, je geringer die Empfindlichkeit (Quotient aus erstem und zweiten Signal) ist. Infolgedessen ist bei nachfolgenden Messungen von Röntgen- oder Gammastrahlung, bei denen die Steuereinheit 11 den Wechselspannungserzeuger 5 abschaltet, das mit diesem Eichfaktor multiplizierte Signal des Wandlers 6, das am Ausgang 10 erscheint, unabhängig von Änderungen der Empfindlichkeit der aus Leuchtstoffschicht 1 und Wandler 6 bestehenden Kombination.

Bei der in Fig. 2 dargestellten Meßeinrichtung sind Teile, die die gleiche Funktion haben wie bei der Einrichtung nach Fig. 1, mit demselben Bezugszeichen bezeichnet. Allerdings ist die Amplitude der von dem Wechselspannungserzeuger 5 gelieferten Wechselspannung durch die Steuereinheit 11 steuerbar. Bei der Messung der Intensität eines Röntgenstrahlenbündels 2 hat der Demultiplexer zunächst die in Fig. 2 in ausgezogenen Linien dargestellte Schaltstellung. Das verstärkte und in ein digitales Datenwort umgesetzte Signal des Wandlers 6 wird in der Steuereinheit 11 mit einem Sollwert verglichen. Bei Abweichungen steuert die Steuereinheit 11 die Amplitude des Wechselspannungserzeugers 5 derart, daß das Wandlersignal konstant bleibt.

Da das Wandlersignal somit praktisch unabhängig von der Intensität der Röntgenstrahlung ist, kann daraus nicht der Meßwert für diese Intensität abgeleitet werden. Jedoch stellt die Amplitude der vom Wechselspannungserzeuger 5 gelieferten Wechselspannung ein Maß für diese Intensität dar. Je größer nämlich die Wechselspannung gemacht werden muß, um das Wandlersignal den Sollwert erreichen zu lassen, desto kleiner ist die Intensität des Röntgenstrahlenbündels - und umgekehrt. Daher wird der Demultiplexer nach Erreichen des Sollwertes in die in Fig. 2 nicht dargestellte Schaltstellung umgeschaltet, und aus dem dabei erhaltenen Digitalwert der Wechselspannung wird der Meßwert abgeleitet und z.B. einer Anzeigeeinheit 15 zugeführt.

Wenn die Empfindlichkeit sich ändert und beispielsweise geringer wird, ist eine höhere Intensität der Röntgenstrahlung bzw. eine größere Amplitude der Wechselspannung erforderlich, um den Sollwert zu erreichen. Um den Meßwert von einer solchen Empfindlichkeitsänderung unabhängig zu machen, wird - bei abgeschalteter Röntgenstrahlung - die Amplitude der Wechselspannung gemessen, die erforderlich ist, damit das Signal des Wandlers dem Sollwert entspricht. Der Kehrwert dieser Amplitude, derbeispielsweise in dem Speicher 8 gespeichert werden kann, ist ein Maß für die Empfindlichkeit der Kombination Leuchtstoffschicht 1 - Wandler 6. Bei den nachfolgenden Intensitätsmessungen wird die Amplitude der Wechselspannung mit diesem Eichfaktor multipliziert.

Es ist aber auch möglich, den Sollwert des Wandlers 6 den Empfindlichkeitsänderungen anzupassen. Zu diesem Zweck wird - bei abgeschalteter Röntgenstrahlung - die Amplitude der Wechselspannung auf einen vorgegebenen konstanten Wert gebracht und das Signal des Wandlers gemessen und digitalisiert. Dieser Digitalwert, der im Speicher 8 gespeichert wird, stellt den Sollwert für die nachfolgenden Intensitätsmessungen dar. Der konstante Wert der Wechselspannung muß dabei so gewählt sein, daß die Intensität des Lumineszenzlichtes größer oder gleich der Intensität des Lumineszenzlichtes bei maximaler Röntgenstrahlung ist.

Die in den Figuren 1 und 2 beschriebene Meßeinrichtung kann beispielsweise in einem Röntgen-Belichtungsautomaten eingesetzt werden, der die Röntgenaufnahme beendet, wenn eine vorgebbare Dosis erreicht wird. In diesem Fall muß das zeitliche Integral über den Meßwert gebildet werden. Ebenso kann mit einer solchen Meßeinrichtung die Dosisleistung bei einer Röntgenaufnahme bzw. einer Röntgendurchleuchtung gemessen werden. Es ist auch möglich, Strahlungsdosen bzw. Strahlungsdosisleistungen absolut zu bestimmen. Zu diesem Zweck muß die Meßeinrichtung einmal mit Hilfe einer Eich-Strahlungsquelle geeicht werden, deren Strahlungsintensität (am Ort der Leuchtstoffschicht 1) genau bekannt ist und der dabei erhaltene Meßwert muß gespeichert werden. Die Intensität einer zu einem späteren Zeitpunkt gemessenen Strahlungsquelle ist dabei in dem Maß größer oder kleiner, als die der Eichquelle, in dem der Mewert größer bzw. kleiner ist als der bei der Eichmessung erhaltene Mewert.

## Patentansprüche

1. Verfahren zum Messen von Röntgen- oder Gammastrahlung mit einer Meßeinrichtung, die eine der Röntgen- oder Gammastrahlung ausgesetzte Leuchtstoffschicht umfaßt, deren Lumineszenzstrahlung durch einen photoelektrischen Wandler in ein elektrisches Signal umgesetzt wird,
dadurch gekennzeichnet, daß die Leuchtstoffschicht (1) einen elektrolumineszenten Leuchtstoff enthält, daß die Leuchtstoffschicht wiederholt einem elektrischen Feld ausgesetzt und dabei die Empfindlichkeit der Leuchtstoffschicht und des Wandlers (6) gemessen und gespeichert wird und daß der Übertragungsfaktor der Meßeinrichtung jeweils in Abhängigkeit von der gespeicherten Empfindlichkeit geändert wird.

2. Meßeinrichtung zur Durchführung des Verfahrens nach Anspruch 1,
dadurch gekennzeichnet, daß die Leuchtstoffschicht (1) zwischen zwei Elektroden (3,4) angeordnet ist, die an eine Spannungsquelle (5) anschließbar sind, daß Mittel (11..14) zum Ableiten eines Eichfaktors aus der Spannung an den Elektroden und dem Signal des Wandlers vorgesehen sind, und daß Mittel (7..9, 11) zum Modifizieren des bei Einwirkung der Röntgen- oder Gammastrahlung auf die Leuchtstoffschicht (1) erzeugten Signals des Wandlers (6) in Abhängigkeit von dem Eichfaktor vorgesehen sind.

3. Meßeinrichtung zur Durchführung des Verfahrens nach Anspruch 1,
dadurch gekennzeichnet, daß die Leuchtstoffschicht (1) zwischen zwei an eine steuerbare Spannungsquelle (5) anschließbaren Elektroden (3,4) angeordnet ist, daß die Spannungsquelle Teil eines Regelkreises ist, in dem bei einer Messung der Röntgen- oder Gammastrahlung die Spannung an den Elektroden einen solchen Wert annimmt, daß das Signal des Wandlers (6) einem Sollwert entspricht, und daß der Meßwert der Röntgenstrahlung aus der Spannung an den Elektroden abgeleitet wird.

4. Meßeinrichtung nach Anspruch 2 oder 3,
dadurch gekennzeichnet, daß die Leuchtstoffschicht (1) aus aktiviertem Zinksulfid besteht.

## Claims

1. A method for the measurement of X-rays or gamma rays by means of a measuring device which comprises a luminescent layer which is exposed to the X-rays or gamma rays and whose luminescence radiation is converted into an electric signal by a photo-electric transducer, characterized in that the luminescent layer (1) contains an electroluminescent material, the luminescent layer being repeatedly exposed to an electric field during which exposure the sensitivity of the luminescent layer and the transducer (6) is measured and stored, the transfer factor of the measuring device being changed each time in dependence on the stored sensitivity.

2. A measuring device for performing the method claimed in Claim 1, characterized in that the luminescent layer (1) is provided between two electrodes (3, 4) which can be connected to a voltage source (5), there being provided means (11 ... 14) for deriving a calibration factor from the voltage across the electrodes and the transducer signal, there also being provided means (7 ... 9, 11) for modifying the signal of the transducer (6), generated during exposure of the luminescent layer (1) to the X-rays or gamma rays, in dependence on the calibration factor.

3. A measuring device for performing the method claimed in Claim 1, characterized in that the luminescent layer (1) is provided between two electrodes (3, 4) which can be connected to a controllable voltage source (5), the voltage source forming part of a control circuit in which, during measurement of the X-rays or the gamma rays, the voltage across the electrodes assumes such a value that the signal of the transducer (6) corresponds to a reference value, and in that the measurement value of the X-rays is derived from the voltage across the electrodes.

4. A measuring device as claimed in Claim 2 or 3, characterized in that the luminescent layer (1) consists of activated zinc sulphide.

## Revendications

1. Procédé de mesure de rayons X ou de rayons gamma à l'aide d'un dispositif de mesure qui contient une couche de matériau luminescent exposée à des rayons X ou des rayons gamma, couche dont le rayonnement luminescent est converti par un convertisseur photoélectrique en un signal électrique, caractérisé en ce que la couche de matériau luminescent (1) contient un matériau électroluminescent, la couche de matériau luminescent est exposée de manière répétée à un champ électrique et, de la sorte, la sensibilité de la couche de matériau luminescent et du convertisseur (6) est mesurée et mémorisée, et le facteur de transmission du dispositif de mesure est modifié respectivement en fonction de la sensibilité mémorisée.

2. Dispositif de mesure pour l'exécution du procédé selon la revendication 1, caractérisé en ce que la couche de matériau luminescent (1) est disposée entre deux électrodes (3, 4) qui peuvent être connectées à une source de tension (5), des moyens (11 ... 14) sont prévus pour déduire un facteur d'étalonnage de la tension présente aux électrodes et du signal du convertisseur, et des moyens (7 ... 9, 11) sont prévus pour modifier le signal du convertisseur (6) produit par l'action des rayons X ou gamma sur la couche de matériau luminescent (1), en fonction du facteur d'étalonnage.

3. Dispositif de mesure pour l'exécution du procédé selon la revendication 1, caractérisé en ce que la couche de matériau luminescent (1) est disposée entre deux électrodes (3, 4) qui peuvent être connectées à une source de tension pouvant être commandée (5), la source de tension fait partie d'une boucle d'asservissement dans laquelle, lors d'une mesure des rayons X ou gamma, la tension au niveau des électrodes adopte une valeur telle que le signal du convertisseur (6) corresponde à une valeur de consigne, et la valeur de mesure des rayons X est déduite de la tension aux bornes des électrodes.

4. Dispositif de mesure selon la revendication 2 ou 3, caractérisé en ce que la couche de matériau luminescent (1) est constituée de sulfure de zinc activé.
